(19) Europäisches Patentamt
European Patent Office
Office européen des brevets

(11) **EP 3 397 424 B1**

(12) **FASCICULE DE BREVET EUROPEEN**

(45) Date de publication et mention de la délivrance du brevet:
**25.10.2023 Bulletin 2023/43**

(21) Numéro de dépôt: **16829298.5**

(22) Date de dépôt: **29.12.2016**

(51) Classification Internationale des Brevets (IPC):
**B24B 3/34** (2006.01)   **B23C 5/20** (2006.01)
**B23B 27/16** (2006.01)

(52) Classification Coopérative des Brevets (CPC):
**B24B 3/343; B23B 27/14; B23C 5/20**

(86) Numéro de dépôt international:
**PCT/FR2016/053684**

(87) Numéro de publication internationale:
**WO 2017/115057 (06.07.2017 Gazette 2017/27)**

(54) **PROCÉDÉ D'AFFUTAGE DE PLAQUETTE D'USINAGE**

VERFAHREN ZUM SCHÄRFEN EINER SCHNEIDPLATTE

METHOD FOR SHARPENING A CUTTING INSERT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2015 FR 1563439**

(43) Date de publication de la demande:
**07.11.2018 Bulletin 2018/45**

(73) Titulaire: **Mecachrome France**
**37403 Amboise Cedex (FR)**

(72) Inventeurs:
• **LOISON, Ludovic**
**37100 Tours (FR)**
• **DE PONNAT, Arnaud**
**37210 Vouvray (FR)**
• **MARTIN, Olivier**
**45230 Sainte Genevieve Des Bois (FR)**

(74) Mandataire: **Corret, Hélène**
**Cabinet Benech**
**15, rue d'Astorg**
**75008 Paris (FR)**

(56) Documents cités:
**CH-A5- 652 063**

• **Jan Dr. Ing. Gäbler ET AL: "Selbstschärfende Rodentics-Zerspanungswerkzeuge - Rattenzähne als Vorbild", wt Werkstatttechnik online, 1 janvier 2007 (2007-01-01), pages 425-426, XP055037132, Extrait de l'Internet: URL:http://www.werkstatttechnik.de/wt/news.php?data[article_id]=36229 [extrait le 2012-09-04]**
• **Peter Kühmstedt ET AL: "3D-SCHNEIDKANTENVERMESSUNG VON PRÄZISIONSSCHNEIDWERKZEUGEN 3D MEASUREMENT OF CUTTING EDGES ON PRECISION CUTTING TOOLS", Annual Report, 31 décembre 2011 (2011-12-31), pages 40-41, XP055304497, Extrait de l'Internet: URL:http://www.iof.fraunhofer.de/content/dam/iof/en/documents/publications/annual-report/2011/3D-measurement-of-cutting-edges-2011-kuehmstedt.pdf [extrait le 2016-09-21]**

**EP 3 397 424 B1**

**Description**

La présente invention concerne un procédé d'affutage de plaquette d'usinage amovible usagée, ladite plaquette présentant une arête endommagée ou usée après utilisation.

Elle trouve une application particulièrement importante bien que non exclusive dans le domaine des plaquettes amovibles jetables. La plupart du temps les plaquettes amovibles jetables ne sont pas affutables par définition.

Dans la pratique il existe cependant une solution consistant à les recycler sous d'autres formes et/ou dans d'autres industries.

On connaît en effet la réutilisation de ces plaquettes transformées en une autre plaquette d'usinage amovible dont la forme s'inscrit dans la forme initiale de la plaquette d'origine.

Une telle réutilisation se justifie lorsque le matériau constituant la plaquette présente un coût significatif.

On appliquera ainsi un procédé de reconditionnement à une plaquette de forme cylindrique en la retaillant successivement à des dimensions en diamètre et en épaisseur, de plus en plus petites et s'inscrivant dans les dimensions précédentes de la plaquette avant usage.

Les transformations successives permettent alors un gain économique dans la réutilisation de la matière, mais nécessitent d'une part d'avoir besoin de telles plaquettes de dimensions plus réduites et d'autre part de les stocker et/ou de les acheminer à l'emplacement voulu, ce qui génère des contraintes et des coûts supplémentaires.

En effet, dans le cas de tels reconditionnements, la nouvelle plaquette ne répond plus aux exigences dimensionnelles et géométriques du modèle initial.

Les surfaces associées à la mise en position et au maintien de la plaquette sur son support porte outil sont en effet modifiées, ce qui amène un montage sur un outil différent en général situé sur un autre site.

Une autre solution consiste à démonter la plaquette, à la réaffuter en dépouille de plaquette pour retrouver le fil coupant, et à la remonter avec les difficultés liées au repositionnement correct dans le respect des tolérances.

Le document CH 652 063 décrit un procédé de postusinage de plaquettes, dans lequel l'enlèvement de matière est réalisé de manière étagée, la surface affûtée étant parallèle à la face supérieure ou la face inférieure de la plaquette.

Ce procédé nécessite de démonter les plaquettes avant de procéder à l'affûtage. De plus, l'opération d'affûtage nécessite un porte-plaquettes spécifique.

Par ailleurs, ce procédé ne permet pas de respecter les paramètres dimensionnels et géométriques spécifiques des plaquettes.

La présente invention vise à fournir un procédé répondant mieux que ceux antérieurement connus aux exigences de la pratique, notamment en ce qu'elle permet plusieurs utilisations de la même plaquette sur le même porte outil, avant sa mise au rebut, et ce de façon simple et efficace, ce qui va générer des gains en coût et en temps d'utilisation de l'outil importants.

Avec l'invention, un plus grand nombre d'affutages que celui habituellement réalisé en dépouille de plaquettes est également observé (deux à dix fois plus).

Egalement, la présente invention permet l'affutage sans démontage de la plaquette de son porte outil. En cas de plusieurs plaquettes sur le même porte-outil, ce qui est fréquent, celles-ci vont pouvoir être rectifiées avec les mêmes tolérances, car on s'affranchit alors des incertitudes dues à leur repositionnement, ce qui constitue un avantage supplémentaire.

L'invention permet de plus d'épargner toutes les parties de contact entre le corps du porte outil et les moyens de serrage ou bridage avec la plaquette. Le maintien de la plaquette usagée puis réaffutée sur le corps du porte outil autorise donc un montage en lieu et place de la plaquette usée, la plaquette affûtée devenant l'équivalent d'une nouvelle plaquette neuve.

Pour ce faire l'invention part notamment de l'idée d'affuter seulement la face de coupe de la plaquette c'est-à-dire avec un outil de rectification qui vient en contact avec la face de coupe et ce, autant de fois que possible et ce tant que le niveau d'usure reste compatible avec les exigences du modèle quelle qu'en soit la forme.

Ainsi, chaque opération d'affutage permet de générer une nouvelle face de coupe et une nouvelle arête de coupe, en attaquant une partie de la face de dépouille.

Dans ce but l'invention propose notamment un procédé d'affutage de plaquette d'usinage amovible usagée présentant une première arête de coupe endommagée après une première utilisation, ladite plaquette présentant à l'état précédent son utilisation des paramètres dimensionnels et géométriques spécifiques dans une échelle de tolérance déterminée et ladite première arête de coupe non endommagée (ou arête initiale) d'acuité déterminée, caractérisé en ce que l'on réalise l'affûtage en face de coupe par enlèvement de matière sur ladite face de coupe sur ladite première arête endommagée, la face de coupe après usinage étant inclinée d'un angle non nul par rapport à ladite face de coupe, pour faire correspondre ladite plaquette auxdits paramètres dimensionnels et géométriques spécifiques dans ladite échelle de tolérance déterminée en présentant une deuxième arête de coupe de ladite acuité déterminée.

Les paramètres dimensionnels et géométriques spécifiques de la plaquette sont, pour une forme géométrique de plaquette déterminée, l'angle de taillant $\beta$ de la plaquette, l'angle de dépouille $\alpha$ de la plaquette et lorsque la plaquette

2

est associée à un outil tournant l'angle de coupe $\gamma_f$ et le rayon effectif $R_\beta$ entre la face de dépouille (intersection avec la face de coupe et/ou l'usure) et l'axe de rotation de l'outil tournant.

Les échelles de tolérances sont quant à elles fonction de la fabrication initiale de la plaquette et des tolérances dimensionnelles acceptées sur les pièces usinées avec ladite plaquette.

Elles sont donc déterminées au cas par cas de façon à la portée de l'homme du métier.

Avantageusement la plaquette présentant la deuxième arête de coupe endommagée après une deuxième utilisation, on affûte une deuxième fois la face de coupe par enlèvement de matière sur ladite face de coupe sur ladite deuxième arête endommagée, pour faire correspondre ladite plaquette auxdits paramètres dimensionnels et géométriques spécifiques dans ladite échelle de tolérance déterminée, en présentant une troisième arête de coupe de ladite acuité déterminée.

Autrement dit on renouvelle au moins deux fois l'opération d'affûtage de la face de coupe lors de la vie de la plaquette.

Egalement avantageusement la plaquette présentant une troisième arête de coupe endommagée après une troisième utilisation, on affûte une troisième fois la face de coupe par enlèvement de matière sur ladite face de coupe sur ladite troisième arête endommagée, pour faire correspondre ladite plaquette auxdits paramètres dimensionnels et géométriques spécifiques dans ladite échelle de tolérance déterminée, en présentant une quatrième arête de coupe de ladite acuité déterminée.

Autrement dit, on renouvelle au moins trois fois l'opération d'affûtage de la face de coupe lors de la vie de la plaquette.

Dans des modes de réalisation avantageux, on a par ailleurs et/ou de plus recours à l'une et/ou à l'autre des dispositions suivantes :

- la plaquette étant propre à être fixée sur un corps d'outil mobile en rotation autour d'un axe par une face de fixation et comportant une face de coupe et une face de dépouille formant entre elles avant usage un angle de taillant $\beta$, le fil du sommet de l'angle $\beta$ formant l'arête de coupe et définissant avec l'axe de rotation du corps d'outil le rayon effectif nominal de l'outil de longueur $R$ +/- $x$, $x$ étant la tolérance d'utilisation de la plaquette pour un usinage de pièce déterminé, on affute la face de coupe par enlèvement de matière sur ladite face de coupe, pour recréer l'arête de coupe en définissant un rayon effectif restant dans la tolérance $R$ +/-$x$. Par exemple on prévoit un rayon $R$ compris entre 6 mm et 2 000 mm avec une tolérance $x$ comprise dans une fourchette de 0,025 mm à 0,38 mm.
- on affute la face de coupe pour que l'arête de coupe présente une acuité d'arête inférieure à 10 microns ;
- les paramètres dimensionnels et géométriques spécifiques comprennent les paramètres suivants :

  $\gamma_f$ : Angle de coupe
  $\beta$ : Angle de taillant de la plaquette
  $\alpha$ : Angle de dépouille de la plaquette.

L'angle de coupe $\gamma_f$ est conservé dans une tolérance au maximum de plus ou moins 30° par rapport à l'angle de coupe initial.

Dans un mode de réalisation particulièrement avantageux, il est possible de conserver l'angle de coupe dans une tolérance de plus ou moins 5° par rapport à l'angle de coupe initial, cette tolérance pouvant aller jusqu'à plus ou moins 1°.

Une telle tolérance est conservée par la modification de l'angle de taillant $\beta$ lors de l'affûtage de la face de coupe.

Avantageusement l'angle de taillant $\beta$ est modifié suite à l'affûtage de la face de coupe, pour conserver le même angle de coupe $\gamma_f$ ou pour améliorer la performance de durée de vie et/ou de productivité de la plaquette en utilisation.

L'invention propose aussi un procédé d'affûtage de plaquettes amovibles d'outil, tel que décrit ciavant, caractérisé en ce que l'outil comportant plusieurs plaquettes, par exemple au moins trois plaquettes, avantageusement au moins six plaquettes, on affute les plaquettes sans démontage desdites plaquettes de l'outil.

est également décrit une plaquette d'usinage présentant une arête de coupe d'acuité inférieure à 10 microns, un revêtement de protection sur sa face de dépouille et aucun revêtement de protection sur sa face de coupe au niveau et dans la région située à proximité de son arête.

Par région on entend une surface de l'ordre de quelques millimètres carrés, de 1 à 10 cm carré, jouxtant la ligne de coupe.

Rappelons que pour ralentir la cinétique d'endommagement de la plaquette (ou outil), une ou plusieurs couches de matériaux de protection de l'outil sont appliquées à sa surface, ces couches constituant un revêtement.

Dans l'art antérieur, la face de dépouille étant celle qui est taillée, son revêtement est en général arraché et l'outil doit de ce fait impérativement subir une opération de revêtement après avoir été affûté ou reconditionné.

Avec l'invention il n'en est rien, en particulier lorsqu'un revêtement de forte épaisseur ($e \geq 2\ \mu$m) est appliqué

sur la ou les faces de dépouille de l'outil.

Avantageusement la plaquette comprend un revêtement d'épaisseur supérieure ou égale à 5 μm sur sa face de dépouille, une telle épaisseur permettant d'avoir toujours une arête revêtue après affutage sans avoir à refaire de revêtement.

L'invention sera mieux comprise à la lecture de la description qui suit de modes de réalisation donnés ci-après à titre d'exemple non limitatifs.

La description se réfère aux dessins qui l'accompagnent dans lesquels :

La figure 1 est un schéma de principe partiel montrant schématiquement l'usinage d'une pièce par un ensemble porte outil/plaquettes rotatif autour d'un axe.

La figure 2 illustre différents types d'usures sur ligne de coupe de plaquettes propres à être réaffutées avec le procédé selon l'invention.

Les figures 3 et 3A montrent schématiquement les paramètres permettant de caractériser une usure d'arête de coupe.

La figure 4 montre quant à elle les paramètres de coupe avant affûtage tels que définis en relation avec la droite qui passe par l'axe de rotation du corps d'outil et le point de contact actif de la plaquette.

La figure 4A est une vue similaire à la figure 4 qui illustre les paramètres de coupe après affûtage en face de coupe (incliné par rapport à la face de coupe) et en face de dépouille.

La figure 5 illustre les étapes d'affutage selon le mode de réalisation du procédé de l'invention plus particulièrement décrit ici.

La figure 6 montre en perspective une plaquette affutée selon un mode de réalisation de l'invention.

La figure 7 illustre schématiquement l'usinage d'une pièce tournante par un outil fixe.

Dans la suite on utilisera les mêmes numéros de référence pour désigner les mêmes éléments ou des éléments similaires.

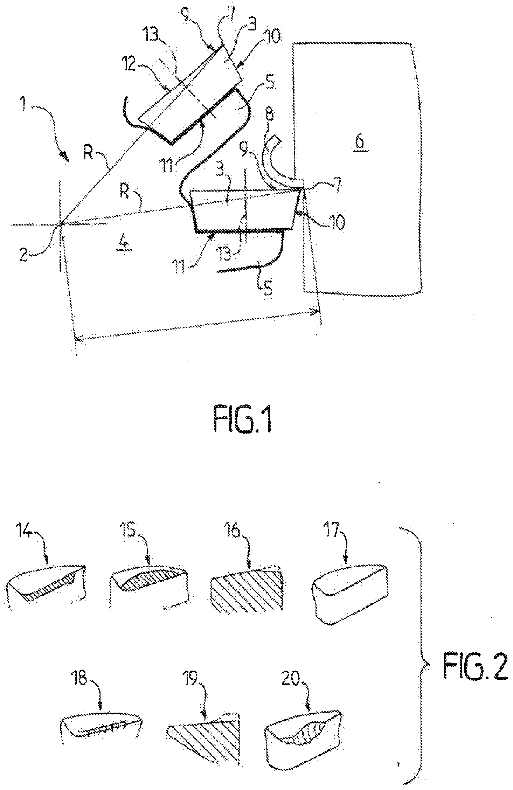

On a représenté schématiquement et partiellement sur la figure 1 un outil 1, mobile en rotation autour d'un axe 2, comprenant une série de plaquettes amovibles 3 par exemple onze plaquettes (non représentées en totalité) réparties radialement régulièrement à la périphérie de l'outil. Ces plaquettes 3 sont montées de façon démontable sur un corps d'outil 4 par le biais de parties ou béquets 5 de fixation des plaquettes 3.

Les plaquettes 3 sont agencées pour attaquer la pièce 6 par le biais de leur arête de coupe respective 7, en générant des copeaux 8.

De façon connue, le cumul des tolérances de fabrication du corps de l'outil ou porte outil et des plaquettes, détermine la tolérance globale de l'outil et plus particulièrement son rayon effectif R délimité d'un côté par l'axe 2 et de l'autre côté par l'arête de coupe 7.

Plus précisément les zones actives de l'outil sont constituées par la face de coupe 9 par exemple sensiblement rectangulaires en contact avec le copeau et la face de dépouille 10 également polygonale en contact avec la pièce.

Chaque plaquette 3 et la partie 5 du corps d'outil en vis-à-vis comportent de plus des zones fonctionnelles, à savoir une zone 11 de jonction et de mise en position de la plaquette sur le porte outil (ou face de fixation) et une zone opposée 12 de bridage de la plaquette sur le porte outil, par exemple par le biais de vis 13 symbolisées en trait mixte sur la figure.

On sait que l'interface entre la partie active de la plaquette et le couple pièce/copeau est soumise à des contraintes mécaniques, thermiques et chimiques importantes causant son endommagement ou usure.

On a représenté sur la figure 2 différents exemples de types d'usure, à savoir une usure en dépouille 14, en cratère 15, par déformation plastique 16, par écaillage 17, en peigne 18, par arête rapportée 19 ou encore par rupture 20.

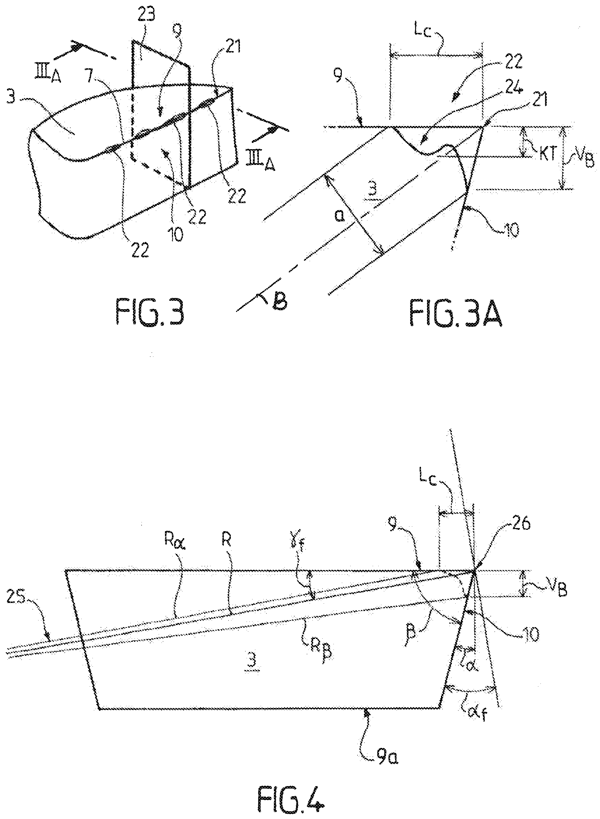

Tous ces types d'usure peuvent être schématisés et caractérisés comme explicité en référence à la figure 3.

Ainsi la plaquette 3 qui comporte l'arête de coupe 7 usée sur sa ligne de coupe 21 en présentant des parties endommagées 22 en cratère et en dépouille, va pouvoir être précisée et/ou définie dans un plan 23 perpendiculaire à la ligne de coupe 21 par les valeurs suivantes (cf. figure 3A) :

La profondeur du cratère 24 : KT
La longueur d'usure en dépouille 10: $V_B$
La longueur de contact au copeau : $L_c$.

Sur la figure 3A, est également représentée l'acuité d'arête a pour l'arête de coupe usée. L'acuité d'arête représente la largeur de la forme du sommet du dièdre, ici constitué par les faces de coupe 9 et de dépouille 10 usées, prise de façon orthogonale à la bissectrice B de ce dièdre.

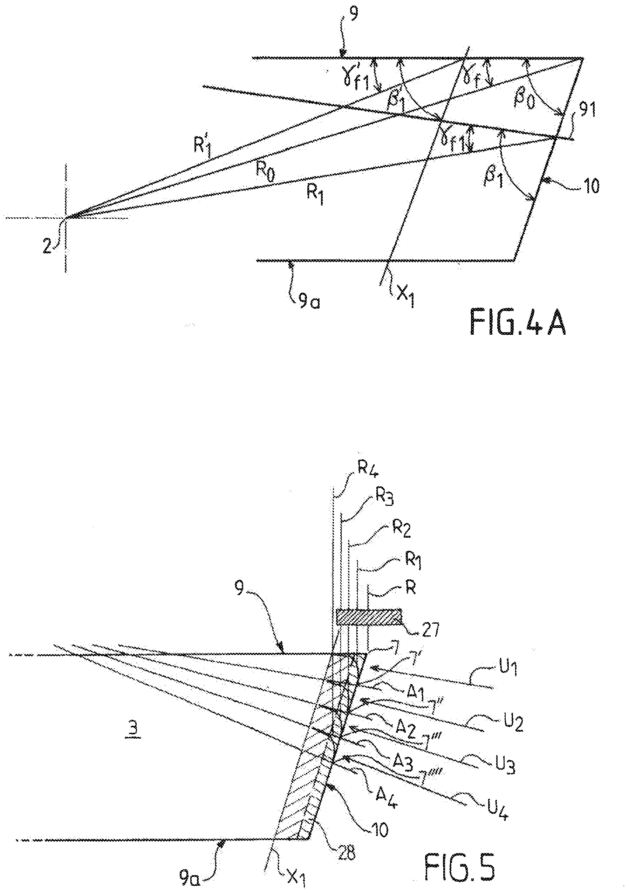

Les paramètres de coupe d'une plaquette 3 sont quant à eux définis en référence à la figure 4 et en relation avec la droite 25 définissant le rayon R effectif de l'outil, qui passe donc par l'axe 2 de rotation du corps d'outil et le point 26 de contact actif de la plaquette, comme suit :

$R$ : Rayon effectif de l'outil neuf

$\gamma_f$ : Angle de coupe de l'outil neuf

$\alpha_f$ : Angle de dépouille de l'outil neuf

$\beta$ : Angle de taillant de la plaquette neuve

$\alpha$ : Angle de dépouille de la plaquette neuve

$R_\alpha$ : Rayon effectif intersection usure et face de coupe

$L_c$ : Longueur d'usure sur la face de coupe de la plaquette

$R_\beta$ : Rayon effectif intersection usure et face de dépouille

$V_b$ : Longueur d'usure sur la face de dépouille de la plaquette.

La figure 4A est une vue similaire à la figure 4 qui illustre les paramètres suivants :

$R_0$ : Rayon effectif de l'outil neuf ;

$\gamma_f$ : Angle de coupe de l'outil neuf ;

$\beta_0$ : Angle de taillant de la plaquette neuve ;

$R_1$ : Rayon effectif de l'outil après le premier affûtage en face de coupe, réalisé selon une ligne d'affûtage inclinée d'un angle non nul par rapport à la face de coupe ;

$\gamma_{f1}$ : Angle de coupe de l'outil après le premier affûtage en face de coupe ;

$\beta_1$ : Angle de taillant de la plaquette après le premier affûtage en face de coupe ;

$R'_1$ : Rayon effectif de l'outil après un premier affûtage en face de dépouille ;

$\gamma'_{f1}$ : Angle de coupe après le premier affûtage en face de dépouille ;

$\beta'_1$ : Angle de taillant de la plaquette après le premier affûtage en face de dépouille.

Cette figure montre que lors de l'opération d'affûtage en face de coupe, l'inclinaison de la nouvelle face de coupe 91, par rapport à la face de coupe 9 ou la face opposée 9a, peut être choisie de telle sorte que son angle de coupe $\gamma_{f1}$ est sensiblement égal à l'angle de coupe de l'outil neuf $\gamma_f$. Ceci est obtenu en modifiant l'angle de taillant $\beta_1$ qui est supérieur à l'angle de taillant $\beta$.

L'augmentation de l'angle de taillant $\beta_1$ est illustrée pour les données suivantes :

$\alpha_0 = 10°$ ; $\beta_0 = 80°$ ; $\alpha_{0f} = 15°$ ; $R_0 = 16$ mm ; $L_C = 0,2$ mm ; $V_B = 0,2$ mm.

Dans ce cas, $\beta_1$ est augmenté de 0,71° par rapport à $\beta_0$ pour conserver l'angle de coupe dans une tolérance de plus ou moins 5° et même de plus ou moins 1° ($\gamma_{f1}$ sensiblement égal à $\gamma_f$).

Cette figure 4A montre également que lorsque la face de dépouille 10 est affûtée parallèlement à l'inclinaison initiale de cette face (selon le trait de coupe $X_1$), l'angle de taillant $\beta'_1$ est conservé mais l'angle de coupe $\gamma'_{f1}$ est modifié, ce qui est préjudiciable à la performance de coupe. Il convient de noter que si la face de dépouille est affûtée de manière non parallèle à l'inclinaison initiale de cette face de dépouille, l'angle de coupe sera modifié et l'angle de taillant également.

On va maintenant décrire, en référence à la figure 5, les étapes successives du procédé d'affutage d'une plaquette 3 selon le mode de réalisation plus particulièrement décrit ici.

Plus précisément celle-ci montre la succession de quatre utilisations pour usinage $U_1$, $U_2$, $U_3$, et $U_4$ avec rayon d'usinage effectif initial R, puis après chaque affutage $R_1$, $R_2$ et $R_3$.

A chaque usinage $U_1$, $U_2$, $U_3$, et $U_4$, est affûtée une face de coupe dont la trace dans le plan est une ligne d'affûtage $A_1$, $A_2$, $A_3$, et $A_4$. Chaque face de coupe comme chaque ligne d'affûtage est inclinée d'un angle non nul par rapport à la face de coupe 9 ou la face 9a en vis-à-vis (pour $A_1$) ou par rapport à la face de coupe précédemment affûtée (pour $A_2$, $A_3$, $A_4$).

Les arêtes de coupe i.e. première arête de coupe initiale 7, deuxième arête de coupe 7', troisième arête de coupe 7", quatrième arête de coupe 7''', etc... présentent la même acuité (dans la tolérance acceptée).

On remarque que le rayon $R_4$ après quatre affutages (lignes d'affutages $A_1$, $A_2$, $A_3$ et $A_4$) en face de coupe 9 est équivalent au rayon R' provenant d'un seul affutage $X_1$ (trait de coupe $X_1$) en face de dépouille 10 au regard d'une usure équivalente après utilisation de l'outil dans le cadre d'un affutage dans la fourchette de tolérance représentée de façon schématique par le rectangle 27 (R +/- x) sur la figure 5.

Plus précisément on constate que la plaquette 3 peut être affûtée trois fois conformément à la fourchette de tolérance du rayon R, contrairement à l'affutage en face de dépouille et au quatrième affutage en face de coupe.

L'enlèvement de matière après un affutage en face de dépouille et un affutage en face de coupe est défini par le rayon effectif Ri après le i-ème affutage.

Ce rayon effectif doit être inférieur ou égal à $R_\alpha$ dans le cas d'un affûtage en face de dépouille et inférieur ou égal à $R_\beta$ dans le cas d'un affutage en face de coupe.

Les rayons $R_\alpha$ et $R_\beta$ sont modélisés comme suit :

$$R_\beta = \sqrt{\left(\left(R - \left(\frac{V_B \times \cos(\alpha_f) \times \tan(\alpha_f)}{\cos(\alpha)}\right)\right)^2 + \left(\frac{V_B \times \cos(\alpha_f)}{\cos(\alpha)}\right)^2\right)}$$

$$R_\alpha = \sqrt{\left(\left(R - L_C \times \cos\left(\beta + \alpha_f - \pi/2\right)\right)^2 + \left(L_C \times \sin\left(\beta + \alpha_f - \pi/2\right)\right)^2\right)}$$

On a donné ci-après sous forme des tableaux 1 et 2 des exemples d'applications numériques illustrant les résultats comparatifs obtenus avec les deux types d'affutage qui montrent le grand intérêt (inattendu) de la solution de l'invention.

TABLEAU 1

| Ce tableau 1 compare les valeurs de $R_\alpha$ et $R_\beta$ en fonction du couple ($L_C$, $V_B$) pour les données initiales 1 : | | | |
|---|---|---|---|
| $\alpha$ = 10°,  $\beta$ = 80°,  $\alpha_f$ = 15°,  R = 16 mm | | | |
| $L_C$ | $V_B$ | $R_\alpha$ | $R_\beta$ |
| 0,3 mm | 0,2 mm | 15.701 mm | 15.948 mm |
| 0,2 mm | 0,2 mm | 15.800 mm | 15.948 mm |
| 0,2 mm | 0,3 mm | 15.800 mm | 15.923 mm |

Le tableau 1 montre que le rayon $R_\beta$ est toujours supérieur à $R_\alpha$ et qu'il est donc possible de réaliser plusieurs affûtages en face de coupe avant d'atteindre la valeur du rayon effectif obtenu après un seul affûtage en face de dépouille.

TABLEAU 2

| Ce tableau donne les valeurs de $R_\alpha$ et $R_\beta$ pour un couple de valeurs ($L_C$, $V_B$) défini et pour un même rayon effectif outil neuf ($R_0$), ainsi que les valeurs de $R_\beta$ après des affûtages successifs (i) en face de coupe (avec un enlèvement minimal de matière). | | |
|---|---|---|
| Données initiales 2 : $\alpha$ = 10°, $\beta$ = 80°, $\alpha_f$ = 15°, $R_0$ = 16 mm, $L_c$ = 0,2 mm, $V_B$ = 0,2 mm | | |
| $R_i$ | $R_\alpha$ | $R_\beta$ |
| $R_0$ = 16 mm | 15.800 mm | 15.948 mm |
| $R_1$ = 15.948 mm | Non calculé | 15.897 mm |
| $R_2$ = 15.897 mm | Non calculé | 15.845 mm |
| $R_3$ = 15.845 mm | Non calculé | 15.794 mm |

Le tableau 2 confirme qu'avec un affûtage en face de coupe, plusieurs affûtages successifs (ici au nombre de 3) peuvent être réalisés avant d'atteindre la valeur du rayon effectif obtenu après un seul affûtage en face de dépouille.

Toujours en référence à la figure 5 et ce pour ralentir la cinétique d'endommagement de l'outil il peut être appliqué une ou plusieurs couches de matériaux aux propriétés plus performantes que celles de l'outil à la surface de découpe. Dans l'art antérieur ces couches qui sont appelées revêtements sont en général réappliquées après chaque affutage.

Cependant dans le cadre de l'invention et en appliquant au préalable sur une plaquette neuve un revêtement 28 de forte épaisseur sur la face de dépouille, c'est-à-dire d'épaisseur suffisante pour qu'il reste toujours une épaisseur (qui va décroissant) malgré les affutages successifs de la face de coupe, il en résulte une arête de coupe qui reste toujours revêtue après affutage.

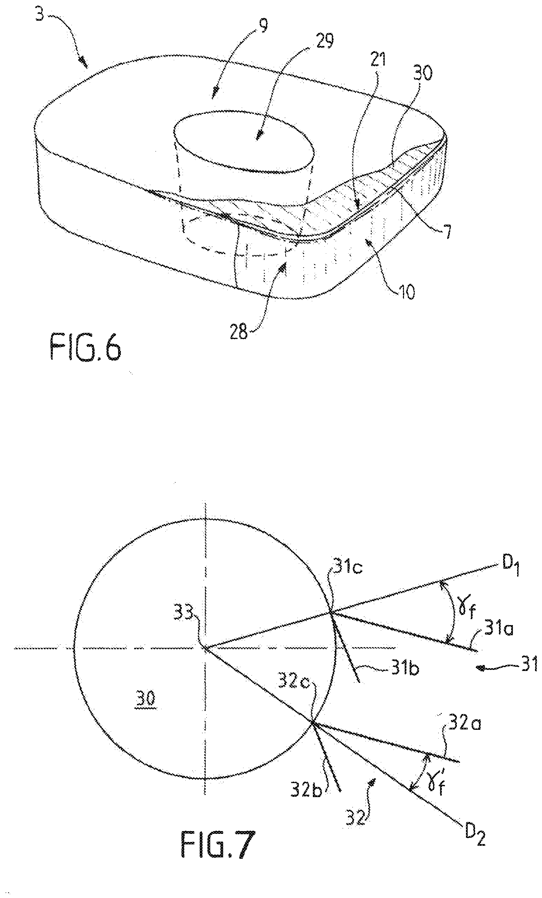

On notera comme l'exemple le montre sur la figure 6, que l'affutage de plaquettes selon l'invention est réalisé sur de multiples formes de plaquettes.

Plus précisément la figure 6 montre une plaquette 3 amovible affûtée selon un mode de réalisation de l'invention, munie d'un orifice 29 de fixation sur son support du type béquet 5 (voir figure 1).

La plaquette 3 comprend une face de coupe 9 par exemple sensiblement ovale et une face de dépouille 10 arrondie définissant entre elles une arête de coupe 7 propre à être usée sur sa ligne de coupe 21 et à présenter une acuité (largeur de la ligne de coupe, c'est-à-dire la largeur de la forme du sommet du dièdre formé par les faces de coupe et de dépouille) inférieure à 10 $\mu$m après affutage.

Les dimensions et formes de la plaquette sont par exemple des formes prismatiques et hyper pyramidales à base carrée, rectangulaire, triangulaire dont le diamètre du cercle inscrit ou circonscrit est compris communément entre 3 à 30 mm.

La face de coupe 9 présente, au niveau de la ligne de coupe 21 et dans la région 30 en trait hachuré sur la figure, une zone dénuée de tout revêtement de protection, laissant apparaitre le métal nu, par exemple du carbure de tungstène ou de l'acier, ou un alliage de type connu pour l'usinage de pièces métalliques. La face de dépouille 10, non affûtée est quant à elle revêtue d'une couche 28 de revêtement d'épaisseur supérieure à 5 $\mu$m, une telle épaisseur permettant d'avoir toujours une arête de coupe 21 protégée du côté de la pièce à découper.

On va maintenant décrire en références aux figures 1 et 5 la mise en œuvre d'un procédé d'affutage de plaquettes 3 selon le mode de réalisation de l'invention plus particulièrement décrit ici.

A partir d'un outil d'usinage tournant autour de son axe 2, on usine la pièce 6 par enlèvement de matière en créant les copeaux 8 évacués naturellement de façon connue en elle-même. Après un certain temps d'utilisation qui est fonction de la dureté et de la longueur des pièces à usiner, mais également des plaquettes de découpe utilisées, le tranchant de celles-ci s'émousse et/ou se détériore pour présenter l'un et/ou l'autre des défauts représentés sur la figure 2.

Les plaquettes ne peuvent alors plus être utilisées sans risque d'endommager les pièces ellesmêmes. Il convient alors de les réaffuter.

L'outil est alors amené sur un banc d'affutage, et sans démontage des plaquettes, est affûté par le biais d'un outil d'affutage connu en lui-même et permettant de retrouver l'acuité des plaquettes initiales en gommant et/ou érasant les défauts de son arête.

Le fait d'attaquer pour affûter la face de coupe permet, de façon simple, en faisant tourner l'outil et sans démontage des plaquettes, de les affûter les unes après les autres, de façon répétitive et identique. Ainsi, toutes les plaquettes vont-elles retrouver le même rayon effectif $R_1$, $R_2$, $R_3$... dans le respect des tolérances du rayon initial R $\pm$ x.

L'outil, qui n'a donc pas été démonté, est alors à nouveau réutilisé jusqu'à ce qu'il soit à nouveau nécessaire de réaffuter ses plaquettes, et ainsi de suite jusqu'à ce qu'on sorte de la tolérance de rayon. Le revêtement de la face de dépouille permet de maintenir la protection de la face en contact avec la pièce malgré les affutages successifs.

A la fin de ces derniers, la plaquette peut éventuellement être réutilisée par reconditionnement en une plaquette de plus petites dimensions hors tout.

L'invention a été décrite pour un ensemble porte-outil / plaquette rotatif.

Elle s'applique également à un ensemble ou outil fixe.

Ainsi, la figure 7 illustre une pièce tournante 30 et deux outils 31, 32 fixes par rapport à cette pièce.

Chaque outil 31, 32 comporte une face de coupe 31a, 32a et une face de dépouille 31b, 32b.

L'angle de découpe de chaque outil est défini par l'angle $\gamma_f$ compté entre la face de coupe 31a, 32a de l'outil et la droite $D_1$, $D_2$ qui passe par le centre 33 de rotation de la pièce 30 et l'arête de coupe 31c, 32c.

Dans le cas de l'outil 31, l'angle $\gamma_f$ est positif, la droite $D_1$ est en dehors du dièdre formé par la face de coupe 31a et la face de dépouille 31b. Dans le cas de l'outil 32, l'angle $\gamma_f$ est négatif, la droite $D_2$ étant à l'intérieur du dièdre formé par la face de coupe 32a et la face de dépouille 32b.

Comme il va de soi et comme il résulte également de ce qui précède, la présente invention n'est pas limitée aux modes de réalisation plus particulièrement décrits. Elle en embrasse au contraire toutes les variantes et notamment celles où l'outil est un outil de perçage, tournage ou fraisage et celles où les plaquettes sont de formes et de dimensions différentes et présentent notamment une surface de coupe de géométrie complexe, c'est-à-dire une surface de coupe comportant des facettes d'orientations différentes que ces facettes soient planes ou courbes.

## Revendications

**1.** Procédé d'affutage de plaquette (3) d'usinage amovible usagée présentant une première arête de coupe (7) endommagée après une première utilisation , ladite plaquette présentant à l'état précédent son utilisation des paramètres dimensionnels et géométriques spécifiques dans une échelle de tolérance déterminée et ladite première arête de coupe (7) non endommagée d'acuité déterminée, **caractérisé en ce que** l'on réalise l'affûtage en face de coupe (9) par enlèvement de matière sur ladite face de coupe sur ladite première arête (7) endommagée, la face de coupe ($A_1$) après usinage ($U_1$) étant inclinée d'un angle non nul par rapport à ladite face de coupe (9), pour faire correspondre ladite plaquette (3) auxdits paramètres dimensionnels et géométriques spécifiques dans ladite échelle de tolérance déterminée en présentant une deuxième arête (7') de coupe de ladite acuité déterminée.

**2.** Procédé selon la revendication 1, **caractérisé en ce que** la plaquette (3) présentant la deuxième arête de coupe (7') endommagée après une deuxième utilisation , on affûte une deuxième fois la face de coupe par enlèvement de matière sur ladite face de coupe sur ladite deuxième arête de coupe (7') endommagée, la face de coupe ($A_2$) après usinage ($U_2$) étant inclinée d'un angle non nul par rapport à la face de coupe précédemment affûtée ($A_1$), pour faire correspondre ladite plaquette (3) aux dits paramètres dimensionnels et géométriques spécifiques dans ladite échelle de tolérance déterminée, en présentant une troisième arête de coupe (7'') de ladite acuité déterminée.

3. Procédé selon la revendication 2, **caractérisé en ce que** la plaquette (3) présentant une troisième arête de coupe (7") endommagée après une troisième utilisation , on affûte une troisième fois la face de coupe par enlèvement de matière sur ladite face de coupe sur ladite troisième arête de coupe (7") endommagée, la face de coupe ($A_3$) après usinage ($U_3$) étant inclinée d'un angle non nul, par rapport à la face de coupe précédemment affûtée pour faire correspondre ladite plaquette (3) auxdits paramètres dimensionnels et géométriques spécifiques dans ladite échelle de tolérance déterminée, en présentant une quatrième arête de coupe (7''') de ladite acuité déterminée.

4. Procédé selon l'une quelconque des revendications précédentes, **caractérisé en ce que** ladite plaquette (3) étant propre à être fixée sur un corps d'outil (4) mobile en rotation autour d'un axe (2) par une face de fixation (11) et comportant une face de coupe (9) et une face de dépouille (10) formant entre elles avant usage un angle de taillant β, le fil du sommet de l'angle β formant l'arête de coupe (7', 7", 7''' ...) et définissant avec l'axe (2) de rotation du corps d'outil le rayon effectif nominal de l'outil (4) de longueur R +/- x, x étant la tolérance d'utilisation de la plaquette pour un usinage de pièce déterminé, on affûte la face de coupe (9) par enlèvement de matière sur ladite face de coupe, pour recréer l'arête de coupe (7) en définissant un rayon effectif restant dans la tolérance R +/-x.

5. Procédé selon l'une quelconque des revendications précédentes, **caractérisé en ce qu'**on affûte la face de coupe (9) pour que l'arête de coupe (7) présente une acuité d'arête inférieure ou égale à 10 microns.

6. Procédé selon la revendication 1, **caractérisé en ce que** les paramètres dimensionnels et géométriques spécifiques comprennent les paramètres suivants :

    $\gamma_f$ : Angle de coupe
    β : Angle de taillant de la plaquette
    α : Angle de dépouille de la plaquette
    L'angle de coupe $\gamma_f$ est conservé dans une tolérance de plus ou moins 5° par rapport à l'angle de coupe initial.

7. Procédé d'affutage selon la revendication 6, **caractérisé en ce que** l'angle de taillant β est modifié suite à l'affûtage de la face de coupe, pour conserver le même angle de coupe $\gamma_f$ ou pour améliorer la performance de durée de vie et/ou de productivité de la plaquette en utilisation.

8. Procédé d'affutage de plaquettes amovibles pour outil (1) selon l'une quelconque des revendications précédentes, **caractérisé en ce que** l'outil (1) comportant plusieurs plaquettes (3), on affûte les plaquettes sans démontage desdites plaquettes de l'outil.

**Patentansprüche**

1. Verfahren zum Schärfen einer gebrauchten, abnehmbaren Bearbeitungsplatte (3),

    die eine erste Schneidkante(7) aufweist,
    die nach einer ersten Verwendung beschädigt ist,
    **wobei** die Platte im Zustand vor ihrer Verwendung spezifische dimensionale und geometrische Parameter in einer bestimmten Toleranzskala und die erste Schneidkante (7), die nicht beschädigt ist und eine bestimmte Schärfe hat, aufweist,
    **dadurch gekennzeichnet,**
    **dass** das Schärfen an der Spanfläche (9) durch Abtragen von Material auf der Spanfläche an der ersten geschädigten Schneidkante (7) durchgeführt wird,
    **wobei** die Spanfläche ($A_1$) nach der Bearbeitung ($U_1$) um einen Winkel ungleich Null in Bezug auf die Spanfläche (9) derart geneigt ist, dass die Platte (3) an die spezifischen dimensionalen und geometrischen Parametern in der bestimmten Toleranzskala angepasst wird,
    **wobei** sie eine zweite Schneidkante (7') mit der bestimmten Schärfe aufweist.

**2.** Verfahren nach Anspruch 1,
**dadurch gekennzeichnet,**

**dass** die Platte (3) die zweite, nach einer zweiten Verwendung beschädigte Schneidkante (7') aufweist, die Spanfläche ein zweites Mal durch Abtragen von Material auf der Spanfläche an der zweiten geschädigten Schneidkante (7') geschärft wird,
**wobei** die Spanfläche ($A_2$) nach Bearbeitung ($U_2$) um einen Winkel ungleich Null in Bezug auf die zuvor geschärfte Spanfläche ($A_1$) derart geneigt ist, sodass die Platte (3) an die spezifischen dimensionalen und geometrischen Parameter in der bestimmten Toleranzskala angepasst wird,
**wobei** sie eine dritte Schneidkante (7") mit der bestimmten Schärfe aufweist.

**3.** Verfahren nach Anspruch 2,
**dadurch gekennzeichnet,**

**dass** die Platte (3) eine dritte, nach einer dritten Verwendung beschädigte Schneidkante (7") aufweist, die Spanfläche ein drittes Mal durch Abtragen von Material auf der Spanfläche an der dritten geschädigten Schneidkante (7") geschärft wird,
**wobei** die Spanfläche ($A_3$) nach Bearbeitung ($U_3$) um einen Winkel ungleich Null in Bezug auf die zuvor geschärfte Spanfläche derart geneigt ist, sodass die Platte (3) an die spezifischen dimensionalen und geometrischen Parameter in der bestimmten Toleranzskala angepasst wird,
**wobei** sie eine vierte Schneidkante (7‴) mit der bestimmten Schärfe aufweist.

**4.** Verfahren nach einem der vorhergehenden Ansprüche,
**dadurch gekennzeichnet,**

**dass** die Platte (3) geeignet ist, an einem um eine Achse (2) drehbar gelagerten Werkzeugkörper (4) durch eine Befestigungsfläche (11) befestigt zu werden und eine Spanfläche (9) und eine Freifläche (10) umfasst, welche zwischen sich vor Gebrauch einen Spanwinkel β bilden,
**wobei** die Linie des Scheitelpunkts des Winkels β die Schneidkante (7', 7", 7‴ ...) bildet und mit der Drehachse (2) des Werkzeugkörpers den nominalen effektiven Radius des Werkzeugs (4) der Länge R +/- x bestimmt,
**wobei** x die Toleranz für die Verwendung der Platte für eine bestimmte Werkstückbearbeitung ist, die Spanfläche (9) durch Abtragen von Material auf der Spanfläche derart geschärft wird, sodass die Schneidkante (7) neu erzeugt wird,
**wobei** ein effektiver Radius bestimmt wird, der innerhalb der Toleranz R +/x bleibt.

**5.** Verfahren nach einem der vorhergehenden Ansprüche,
**dadurch gekennzeichnet,**
**dass** die Spanfläche (9) derart geschärft wird, sodass die Schneidkante (7) eine Kantenschärfe von weniger als oder gleich 10 Mikrometer aufweist.

**6.** Verfahren nach Anspruch 1,
**dadurch gekennzeichnet,**
**dass** die spezifischen dimensionalen und geometrischen Parameter folgende Parameter umfassen:

$\gamma_f$: Schneidwinkel
β: Spanwinkel der Platte
α: Freiflächenwinkel der Platte
Der Schneidwinkel $\gamma f$ wird innerhalb einer Toleranz von plus oder minus 5 ° gegenüber dem ursprünglichen Schneidwinkel beibehalten.

**7.** Verfahren zum Schärfen nach Anspruch 6,
**dadurch gekennzeichnet,**
**dass** der Schneidwinkel β nach dem Schärfen der Spanfläche geändert wird, um den gleichen Schneidwinkel $\gamma_f$ beizubehalten oder um die Leistung bezüglich Lebensdauer und/oder Produktivität der Platte im Gebrauch zu steigern.

**8.** Verfahren zum Schärfen von abnehmbaren Platten für ein Werkzeug (1) nach einem der vorhergehenden Ansprüche,
**dadurch gekennzeichnet,**

**dass** das Werkzeug (1) mehrere Platten (3) umfasst und die Platten geschärft werden, ohne dass die Platten aus dem Werkzeug ausgebaut werden.

**Claims**

1. Method for sharpening a worn removable machining insert (3) having a first cutting edge (7) damaged after a first use, said insert having, in the state prior to its use, specific dimensional and geometric parameters within a defined tolerance range and said first undamaged cutting edge (7) of defined sharpness, **characterized in that** the sharpening is carried out on the rake face (9) by removing material from said rake face on said first damaged edge (7), the rake face (A1) after machining (U1) being inclined by a nonzero angle with respect to said rake face (9), in order to make said insert (3) correspond to said specific dimensional and geometric parameters within said defined tolerance range, while having a second cutting edge (7') of said defined sharpness.

2. Method according to Claim 1, **characterized in that**, with the insert (3) having the second cutting edge (7') damaged after a second use, the rake face is sharpened a second time by removing material from said rake face on said second damaged cutting edge (7'), the rake face (A2) after machining (U2) being inclined by a nonzero angle with respect to the previously sharpened rake face (A1), in order to make said insert (3) correspond to said specific dimensional and geometric parameters within said defined tolerance range, while having a third cutting edge (7") of said defined sharpness.

3. Method according to Claim 2, **characterized in that**, with the insert (3) having a third cutting edge (7") damaged after a third use, the rake face is sharpened a third time by removing material from said rake face on said third damaged cutting edge (7"), the rake face (A3) after machining (U3) being inclined by a nonzero angle with respect to the previously sharpened rake face, in order to make said insert (3) correspond to said specific dimensional and geometric parameters within said defined tolerance range, while having a fourth cutting edge (7‴) of said defined sharpness.

4. Method according to any one of the preceding claims, **characterized in that**, with said insert (3) being able to be fastened by a fastening face (11) to a tool body (4) rotatable about an axis (2) and comprising a rake face (9) and a flank face (10) forming a wedge angle β between them before wear, the edge of the apex of the angle β forming the cutting edge (7', 7", 7‴...) and defining, with the axis (2) of rotation of the tool body, the nominal effective radius of the tool (4) of length R +/- x, x being the use tolerance of the insert for a defined machining of a component, the rake face (9) is sharpened by removing material from said rake face, in order to recreate the cutting edge (7) while defining an effective radius remaining within the tolerance R +/- x.

5. Method according to any one of the preceding claims, **characterized in that** the rake face (9) is sharpened such that the cutting edge (7) has an edge sharpness which is less than or equal to 10 microns.

6. Method according to Claim 1, **characterized in that** the specific dimensional and geometric parameters comprise the following parameters:

    γf: rake angle
    β: wedge angle of the insert
    α: relief angle of the insert
    the rake angle γf is kept within a tolerance of more or less 5° with respect to the initial rake angle.

7. Sharpening method according to Claim 6, **characterized in that** the wedge angle β is modified following the sharpening of the rake face, in order to keep the same rake angle γf or to improve the service life performance and/or productivity performance of the insert in use.

8. Method for sharpening removable inserts for a tool (1) according to any one of the preceding claims, **characterized in that**, with the tool (1) comprising a plurality of inserts (3), the inserts are sharpened without removing said inserts from the tool.

FIG.1

FIG.2

FIG.3

FIG.3A

FIG.4

FIG.4A

FIG.5

FIG.6

FIG.7

**EP 3 397 424 B1**

## RÉFÉRENCES CITÉES DANS LA DESCRIPTION

**Documents brevets cités dans la description**

- CH 652063